# EUROPEAN PATENT APPLICATION

(11) **EP 4 738 654 A1**
(43) Date of publication of application: **06.05.2026**
(21) Application number: 24209894.5
(22) Date of filing: 30.10.2024
(51) Int. Cl.: H02K 1/20, H02K 3/24, H02K 5/20, H02K 9/197

(54) **COOLING SYSTEMS FOR E-MACHINES HAVING A WINDING ARRANGEMENT**

(71) Applicant: Garrett Transportation I Inc., Torrance, CA 90504 (US)
(72) Inventor: SLAMA, David, 62700 Brno (CZ); BREZINA, Michal, 62700 Brno (CZ); QUINN, Cheney, 62700 Brno (CZ); TOMANEC, Filip, 62700 Brno (CZ)
(74) Representative: Ingrassia, Fisher & Lorenz UK Ltd.

(57) **Abstract**

An e-machine includes a stator core having a first axial end and a second axial end that are separated along a longitudinal axis. The stator core has a slot that extends between the first axial end and the second axial end. The e-machine further includes a plurality of winding members. The plurality of winding members comprise a plurality of longitudinal segments that are received in the slot and that extend between the first axial end and the second axial end. The stator core has a fluid distribution member attached to the first axial end of the stator core, the fluid distribution member comprising a fluid distribution channel having a first end and a second end, the first end comprising an opening for receiving fluid and the second end being fluidly connected to at least one fluid passageways formed within the plurality of longitudinal segments.

## Description

### TECHNICAL FIELD

The present disclosure relates, generally, to an e-machine and, more particularly, to an e-machine system with a windings arrangement in which segments of the winding are arranged to form fluid passageways within a slot of a stator of the e-machine.

### BACKGROUND

E-machines, such as electric motors, electric generators, and combination electric motor/generators, are provided for a variety of uses. For example, electric traction motors are used in electric vehicles, electric locomotives, and so on. Electric generators also have many industrial uses.

E-machine systems typically generate heat during operation. Additionally, e-machine systems may operate in high-temperature environments. Elevated temperatures may hinder performance and/or cause other disadvantages associated with the e-machine. Thus, it is desirable to include cooling features in the e-machine. However, the design and provision of such cooling features remains challenging. There may be detrimental increases in costs, part count, device complexity, size, bulkiness, and/or weight if such cooling features are included.

Thus, there remains a need for an e-machine system that provides effective cooling. There also remains a need for e-machine systems where the cooling features are provided in a relatively compact, low-weight arrangement. There is also a need for an e-machine system including cooling features that may be manufactured with high efficiency and with reduced costs and manufacturing time.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

According to a first aspect of the invention, there is provided an e-machine comprising: a stator core having a first axial end and a second axial end that are separated along a longitudinal axis, the stator core having a slot that extends between the first axial end and the second axial end; a plurality of winding members, the plurality of winding members comprising a plurality of segments that are received in the slot and that extend between the first axial end and the second axial end, the plurality of segments disposed in an arrangement that define one or more fluid passageways within the slot, the one or more fluid passageways extending between the first axial end and the second axial end of the stator core; and a fluid distribution member, the fluid distribution member being attached to the first axial end of the stator core, the fluid distribution member comprising a first fluid distribution channel having a first end and a second end, the first end being connected to an opening for receiving fluid and the second end being fluidly connected to at least one of the one or more fluid passageways.

In an embodiment, the fluid distribution member comprises a bonded stack of at least two disc-shaped members, wherein a first disc-shaped member of the at least two disc-shaped members comprises the opening and a second disc-shaped member of the at least two disc-shaped members comprises the second end of the first fluid distribution channel. As will be explained in more detail below, forming the fluid distribution member from a stack of disc-shaped members allows for improved ease of manufacturing.

In an embodiment combinable with the above embodiment, the plurality of segments are disposed in an arrangement that define a plurality of fluid passageways within the slot, wherein the second end is located proximate to only one of the plurality of fluid passageways within the slot, optionally wherein the second end is fluidically connected to only one of the plurality of fluid passageways within the slot and is fluidically isolated from other fluid passageways within the slot.

In an embodiment combinable with the above embodiments, the fluid distribution member comprises a second fluid distribution channel, the second fluid distribution channel having a first end that is connected to the opening and having a second end that is different to the second end of the first fluid distribution channel.

In an embodiment combinable with the above embodiments, the bonded stack of at least two disc-shaped members comprises a third disc-shaped member, and wherein the second end of the second fluid distribution channel is formed in only the third disc-shaped member.

In an embodiment combinable with the above embodiments, the second end of the second fluid distribution channel is located proximate to only one of the plurality of fluid passageways within the slot, optionally wherein the second end is fluidically connected to only the only one of the plurality of fluid passageways within the slot and is fluidically isolated from other fluid passageways within the slot.

In an embodiment combinable with the above embodiments, the second end of the first distribution channel is located proximate to a different one of the plurality of fluid passageways within the slot as compared to the second end of the second distribution channel.

In an embodiment combinable with the above embodiments, the e-machine further comprises an e-machine housing that defines a cavity, the stator core received in the cavity, the e-machine housing having a housing fluid inlet and a housing fluid outlet, the housing fluid inlet and the housing fluid outlet being spaced apart along the longitudinal axis, and the housing fluid inlet being in fluid communication with the opening of the fluid distribution channel; and wherein the e-machine further comprises a fluid coolant system configured to provide a coolant fluid into the cavity for flow into the fluid inlet channel.

In an embodiment combinable with the above embodiments, the e-machine is an electric motor.

In an embodiment combinable with the above embodiments, the e-machine is an electric generator.

In an embodiment combinable with the above embodiments, the e-machine includes a first seal disposed at the first axial end of the stator core and a second seal disposed at the second axial end of the stator core, the first and second seals configured to prevent fluid flow from the slot to end windings disposed outside of the stator core.

According to a second aspect of the invention, there is provided an e-machine comprising a stator core received in the cavity, the stator core having a first axial end and a second axial end that are separated along a longitudinal axis. The stator core has a slot that extends between the first axial end and the second axial end; a plurality of winding members, the plurality of winding members comprising a plurality of segments that are received in the slot and that extend between the first axial end and the second axial end; and a cooling channel that extends through the stator core between the first and second axial ends, wherein the cooling channel is fluidically isolated from the slot, and wherein the cooling channel comprises a first opening for fluid inflow and a second opening for fluid outflow.

In an embodiment, the e-machine housing comprises a fluid inlet and a fluid outlet, the fluid inlet and the fluid outlet being spaced apart along the longitudinal axis, and the fluid inlet being in fluid communication with the first opening of the cooling channel; and wherein the e-machine further comprises a fluid coolant system configured to provide a coolant fluid into the cavity for flow into the fluid inlet channel.

In an embodiment combinable with the above embodiment, an end winding of the stator core is fluidically connected to the slot with no seal disposed therebetween.

In an embodiment combinable with the above embodiments, the e-machine is an electric motor.

In an embodiment combinable with the above embodiments, the e-machine is an electric generator.

Other desirable features and characteristics of the present disclosure will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a schematic illustration of an e-machine system;
FIG. 2 is a cross-section view of stator assembly of an e-machine system;
FIGs. 3A to 3E show slot winding configurations that allow for the formation of one or more fluid passageways within each slot of a stator core;
FIG. 4 is a cross-sectional view of part of a fluid distribution member according to embodiments;
FIG. 5 is a cross-sectional view of part of the fluid distribution member shown in FIG. 4;
FIG. 6A is an isometric view of a fluid distribution member and stator core according to embodiments;
FIG. 6B is another isometric view of a fluid distribution member and stator core according to embodiments;
FIG. 7 is a cross-sectional view of part of a fluid distribution member according to embodiments;
FIG. 8 is a cross-sectional view of part of the fluid distribution member shown in FIG. 7;
FIG. 9 is an isometric view of a fluid distribution member and stator core according to embodiments;
FIG. 10 is a cross-sectional view of part of a stator core according to embodiments;
FIG. 11 is cross-sectional view of a stator core according to embodiments;
FIG. 12 is cross-sectional view of a stator assembly according to embodiments; and
FIG. 13 is a cross-sectional view of a stator assembly according to embodiments.

### DETAILED DESCRIPTION

The following detailed description is merely exemplary in nature and is not intended to limit the present disclosure or the application and uses of the present disclosure. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the present disclosure and not to limit the scope of the present disclosure, which is defined by the claims. Furthermore, there is no intention to be bound by any expressed or implied theory presented in the preceding technical field, background, brief summary, or the following detailed description.

Broadly, example embodiments disclosed herein include an e-machine system, such as an electric motor system, having features that provide effective cooling for efficient high-temperature operation of the e-machine.

The stator member of the e-machine includes a stator core with a plurality of slots (i.e., grooves, passages, etc.) that extend between a first axial end and a second axial end of the stator core. The slots may extend along a respective longitudinal axis that is parallel to an axis of rotation of the rotating group of the e-machine. The slots may be circumferentially arranged (e.g., spaced equally) about the axis of rotation. In various embodiments, the slots may be open to the inner radial surface of the stator core.

The stator core includes a plurality of winding members comprising a plurality of longitudinal segments that are received in respective slots. In at least one of the slots, there may be a group of longitudinal segments. These longitudinal segments have a cross-sectional shape (taken through the longitudinal axis of the slot). These longitudinal segments are disposed (i.e., layered, oriented, etc.) in an abutting arrangement. In embodiments, the shapes and arrangements of the winding members provide spacing between the adjacent longitudinal segments. Where such spacing is provided, fluid passageways are defined along the slots. Additionally, fluid passageways may be defined between neighboring ones of the longitudinal segments of the windings.

The e-machine system may also include a fluid coolant system that may provide a cooling fluid (refrigerant, coolant, oil, air, other gas, other liquid, etc.) to the e-machine. This fluid coolant may be provided to the slots to flow amongst the longitudinal segments of the windings. Thus, fluid coolant may be provided directly to the windings and through the stator core for effective cooling. In embodiments, the fluid coolant system provides pressurized cooling fluid to the e-machine.

Additionally, the e-machine may be relatively compact and lightweight. The e-machine may also provide manufacturing benefits, such as a relatively low part count, as well as ease of assembly, installation, repair, and replacement.

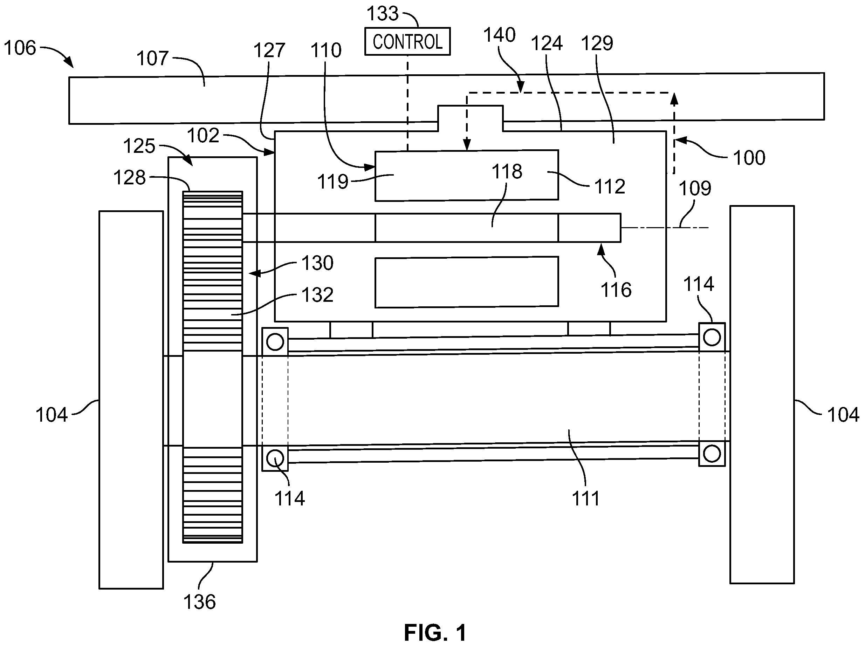

FIG. 1 is a schematic view of an e-machine system 100 according to example embodiments of the present disclosure. The e-machine system 100 may have a variety of configurations. In some embodiments, the e-machine system 100 may be configured as a traction drive system 102 that is included, for example, on a vehicle 106. Thus, the traction drive system 102 may be configured for driving one or more wheels 104 of the vehicle 106. More specifically, the wheels 104 may be included at opposite ends of an axle 111, and a chassis 107 may be supported on the wheels 104 by a suspension system (not shown). The vehicle 106 may be an electric car, truck, van, motorcycle, boat, or other vehicle. However, it will be appreciated that the e-machine system 100 may be configured otherwise without departing from the scope of the present disclosure, such as in the form of an electric generator that is not included on a vehicle.

Generally, the e-machine system 100 may include a housing 125. The housing 125 may include an e-machine housing 124 with a cavity 129 defined therein. The e-machine system 100 may also include an e-machine 110 that is received within the cavity 129 and housed within the e-machine housing 124.

The e-machine 110 may be an electric motor 112. For example, in some embodiments, the electric motor 112 may be an AC three-phase electric motor. However, it will be appreciated that the e-machine 110 may be configured otherwise. The e-machine 110 may alternatively be configured as an electric generator. Furthermore, the e-machine 110 may be operable in some modes as a motor and in additional modes as a generator. The e-machine 110 includes a rotor member 118 and a stator member 119 that are housed within the cavity 129 of the e-machine housing 124.

The rotor member 118 may be supported on a shaft 116, and the shaft 116 is supported for rotation about a longitudinal axis 109 within the e-machine housing 124. The stator member 119 of the e-machine 110 may be fixed within the e-machine housing 124 and at least partly surrounds the rotor member 118 and the shaft 116. In embodiments in which the e-machine 110 is an electric motor 112, the shaft 116 may be referred to as an output shaft 116 of the electric motor 112. In some embodiments, such as when the e-machine system 100 is mounted on a vehicle 106, a gear connection member 128 (e.g., a gear, a spline on the shaft 116, or other part with gear teeth features) may be operably supported on the shaft 116.

In various embodiments, the e-machine system 100 includes a transmission 130. The transmission 130 may include a geartrain 132 that is housed within a gearbox housing 136 of the housing 125. The gearbox housing 136 may be attached (e.g., fixed) to a side wall 127 of the e-machine housing 124.

The geartrain 132 may operatively connect the e-machine 110 and the axle 111 and may transmit power therebetween. The e-machine 110 may be coupled to the wheels 104 via the transmission 130. The geartrain 132 may be attached to the gear connection member 128 and to the axle 111. The gearbox housing 136 and the e-machine housing 124 may be moveably supported on the axle 111 by one or more bearings 114 (e.g., a bearing sleeve, suspension tube, etc.) such that the axle 111 may rotate relative thereto.

During operation, the electric motor 112 may rotatably drive the shaft 116 and the gear connection member 128 supported thereon. This rotational power may transfer to the geartrain 132, which may transmit the power to the axle 111 to rotate the wheels 104 and propel the vehicle 106. These operations may be controlled by a control system 133. The control system 133 may control speed of the motor 112 and/or other functions of the motor 112.

Furthermore, the e-machine system 100 may include a fluid coolant system 140. The fluid coolant system 140 may be configured for circulating a fluid, such as a fluid coolant. The fluid coolant may be oil, for example. In embodiments, the fluid coolant system 140 is configured to supply pressurized fluid coolant, and may comprise a pump or other such means for delivering pressurized fluid coolant.

The fluid coolant system 140 is coupled to the stator member 119. Accordingly, the fluid coolant system 140 is configured to provide cooling to the stator member 119. This, in turn, provides a degree of cooling to the rotor member 118, to bearings, and/or to other adjacent areas of the e-machine 110.

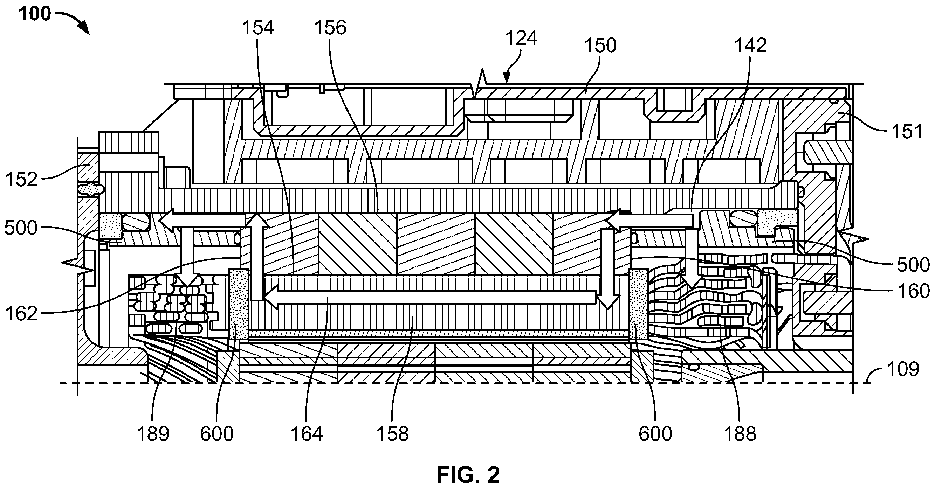

As represented in FIG. 2, which shows a top half of the e-machine 100 with the longitudinal axis 109 at the bottom of the figure, the e-machine housing 124 may be cylindrical and hollow. The e-machine housing 124 may include an outer radial wall 150, a first axial wall 151 and a second axial wall 152. The outer radial wall 150 may extend in a circumferential direction about the longitudinal axis 109 and may extend longitudinally between the first axial wall 151 and the second axial wall 152. The first axial wall 151 and second axial wall 152 may be disc-shaped and may extend transverse to the longitudinal axis 109. In some embodiments, the outer radial wall 150 and first axial wall 151 may be integrally connected so as to be one-piece and unitary, whereas the second axial wall 152 may be removably attached to the other end of the outer radial wall 150. The outer radial wall 150, first axial wall 151, and second axial wall 152 may collectively define a cavity therein. In embodiments, the cavity is substantially cylindrical and may be centered on the axis 109.

The stator member 119 includes a stator core 154. The stator core 154 is typically hollow and cylindrical so as to include an outer radial surface 156, an inner radial surface 158, a first axial end 160, and a second axial end 162. In various embodiments, the stator core 154 comprises a plurality of disc-shaped laminations that are bonded together in a stacked configuration and are arranged along the axis 109 so as to collectively define the outer radial surface 156 and the inner radial surface 158. Each one of disc-shaped laminations may have a width of from about 0.1mm to about 5mm. It will be appreciated that other widths of the disc-shaped laminations are possible, and that the widths of the disc-shaped laminations may be chosen based, for example, on manufacturing considerations.

As shown in FIG. 2, the stator core 154 includes at least one, and preferably a plurality of, slot(s) 164 (i.e., grooves, passages, etc.). It will be appreciated that the laminations of the stator core 154 may individually include notches that, when stacked together, collectively define the slots 164. The slots may have various cross-sections, for example curved or rectangular cross-sections. In some embodiments, the slots 164 may be open at the inner radial surface 158. Alternatively, the slots 164 may be closed at the inner radial surface 158. Each slot 164 extends parallel to the longitudinal axis 109 between the first axial end 160 and the second axial end 162 of the stator core 154. The slots 164 may be open at the first axial end 160 and the second axial end 162 of the stator core 154. The plurality of slots 164 may be disposed in a spaced arrangement (e.g., be equally spaced) about the longitudinal axis 109.

The stator member 119 may further include a plurality of windings (i.e., winding members, wiring members, etc.). The windings are electrically conductive and typically comprise a plurality of elongate segments. The windings are arranged in a plurality of coils that wrap back-and-forth between first and second axial ends 160, 162 of the stator core 154 and between different ones of the plurality of slots 164.

Accordingly, the windings include a plurality of longitudinal segments 172 that are received in the slots 164 of the stator core 154 and that extend generally along the axis of the respective slot 164.

The windings also include a plurality of first end windings 188 proximate to the first axial end 160 of the stator core 154 and a plurality of second end windings 189 proximate to the second axial end 162. The first end windings 188 connect respective pairs of longitudinal segments 172 in different slots 164, and the first end windings 188 may be disposed outside of the stator core 154 on the first axial end 160. In some embodiments, at least one of the first end windings 188 may extend away from the first axial end 160 to electrically connect to the control system 133. Furthermore, the second end windings 189 connect respective pairs of the longitudinal segments 172 in different slots 164. The second end windings 189 may be disposed outside the stator core 154 at the second axial end 162. The first and second end windings 188, 189 electrically connect ones of the longitudinal segments 172 for operation of the stator member 119 and for operative connection to the control system 133.

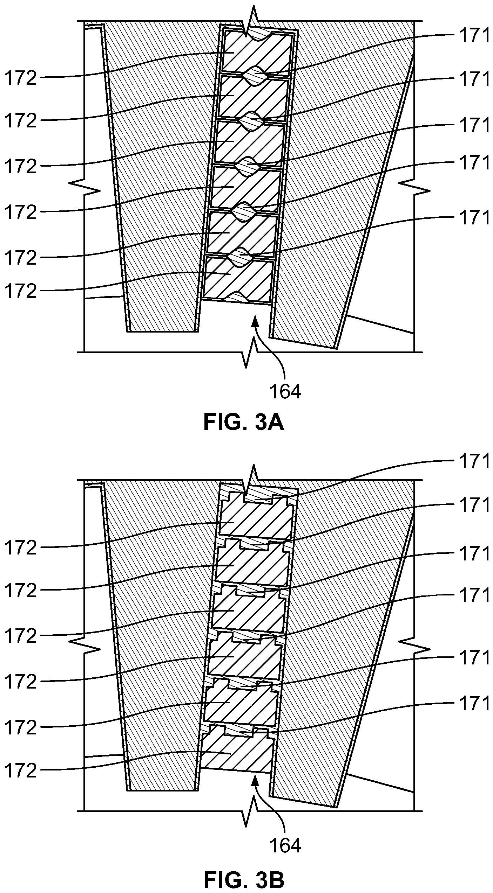

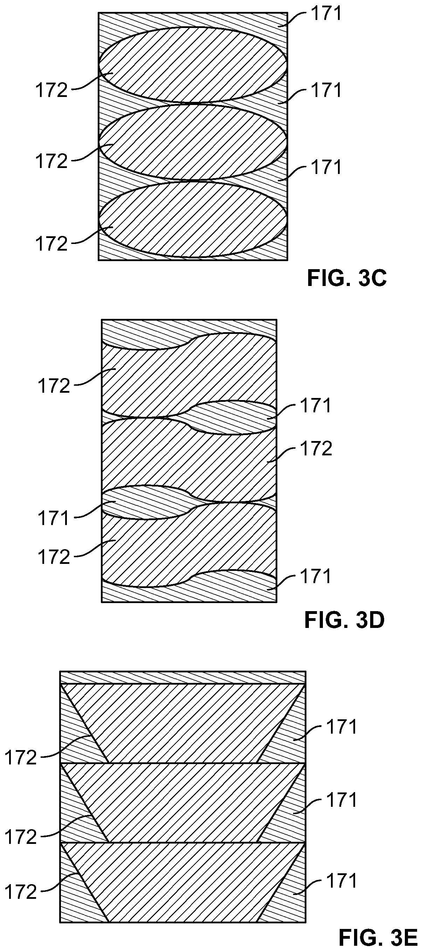

The longitudinal segments are arranged in a manner so as to define fluid passageways therethrough. Example arrangements of longitudinal segments 172 that define fluid passageways 171 therethrough are shown in FIGs. 3A to 3E. As can be seen in each of FIGs. 3A to 3E, the longitudinal segments 172 may have various cross-sectional shapes that, when arranged in a certain manner, allow for a plurality of fluid passageways 171 to be defined therethrough. FIGs. 3A and 3B show the longitudinal segments 172 being arranged within a slot 164 of the stator core 154, whilst FIGs. 3C, 3D and 3E show example alternative shapes and arrangements of longitudinal segments 172 that define a plurality of fluid passageways 171 therethrough.

The longitudinal segments 172 may be formed, shaped, and provided with the cross-sectional profiles necessary to form fluid passageways 171 therethrough in a number of ways without departing from the scope of the present disclosure. For example, wire may be extruded or drawn through a die to shape the cross sectional profile of the longitudinal segments 172. Once shaped, the plurality of windings 170 may be provided on the stator core 154. As shown in FIGs. 3A to 3E, the longitudinal segments 172 may be arranged within the slots 164 in a layered or radially-stacked arrangement. The longitudinal segments 172 may abut each other in the arrangement. The longitudinal segments 172 may be aligned with each other to define the fluid passageways 171, or may be misaligned. The cross-sectional profiles of the longitudinal segments 172 may have integrally-included features such as ridges or grooves that define fluid passages between neighboring pairs of the segments 172.

Referring again to FIG. 1, the fluid coolant system 140 may be fluidly connected to the fluid passageways 171 of the stator member 119 to provide fluid coolant thereto. As noted above, the fluid coolant provided by the fluid coolant system 140 may be pressurized. As shown in FIG. 2, the e-machine housing 124 may include a coolant inlet 142 and a coolant outlet 144. The coolant inlet 142 and the coolant outlet 144 may be spaced apart along the axis 109. The coolant inlet 142 may extend radially into the first axial wall 151. The coolant outlet 144 may extend radially out of the second axial wall 152. The coolant inlet 142 and the coolant outlet 144 may be disposed on the same side of the axis 109. Although FIG. 2 shows the coolant inlet 142 and the coolant outlet 144 on the same side of the e-machine housing 124, it will be appreciated that other positions for the coolant inlet 142 and the coolant outlet 144 are possible. For example, the coolant inlet 142 and the coolant outlet 144 may be located on opposite sides of the e-machine housing 124, or in alternative positions about the e-machine housing 124.

In embodiments, the coolant inlet 142 and the coolant outlet 144 are fluidly connected to the slots 164 and, thus, to the fluid passageways 171 defined through the longitudinal segments 172 arranged within the slots. Accordingly, during operation, fluid coolant supplied through the inlet 142 is able to flow around, between, through and amongst the longitudinal segments 172. This fluid coolant receives heat as it flows longitudinally through the slots 164 before exiting via the coolant outlet 144.

In order to ensure the end windings 188, 189 are not flooded with liquid coolant due to the open nature of the slots 164 of the stator core 154, one or more seals 600 may be used to fluidically isolate the fluid passageways 171 formed within the slots 164 of the stator core from the end windings 188, 189. The one or more seals 600 may be formed from a material that does not degrade under the high temperatures typically experienced within the stator, for example from high temperature sealing foam or from rubber-like sealants. As shown in FIG. 2, first and second seals 600 are provided at the first and second axial ends 160, 162 of the stator core 154 in order to prevent fluid coolant from flowing out of the slots 164 to the end windings 188, 189.

In order to provide cooling to the end windings 188, 189, fluid coolant may be sprayed onto the end windings 188, 189 of the stator via holes / spray jets formed in deflectors 500 that are positioned between the fluid inlet 142 and a first end winding 188 and between the fluid outlet 144 and a second end winding 189. In operation, fluid coolant is introduced via the fluid inlet 142 to the area between the stator housing and the deflectors. Some of this fluid coolant is sprayed onto the first end winding 188 via holes formed in the deflectors 500. The remaining fluid coolant flows to the fluid passageways formed in the slots 164 of the stator core 154. The same deflector configuration may be used in the area proximate to the fluid outlet 144, where a portion of the fluid coolant flowing to the fluid outlet may be sprayed onto the second end winding 189 via holes formed in the deflector 500.

Accordingly, fluid coolant received via the fluid inlet 144 may flow directly over, between, and amongst the longitudinal segments 172 as the coolant flows longitudinally along the stator member 119 without flooding of the end windings 188, 189. Accordingly, the fluid coolant system 140 may effectively cool the e-machine system 100. Furthermore, the e-machine system 100 may be compact and lightweight. Also, the part count may be relatively low, and the e-machine system 100 may be manufactured with high efficiency.

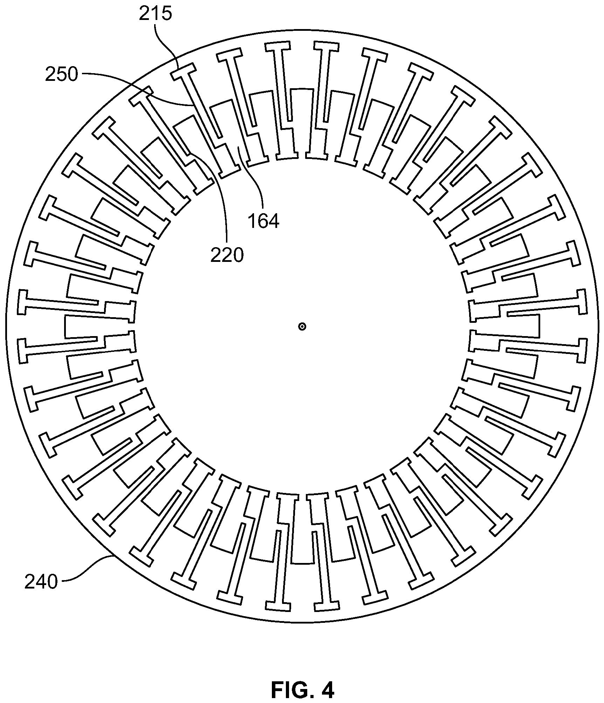

In order to improve the effectiveness of the fluid coolant in cooling the stator assembly, a fluid distribution member 200 is disposed between the fluid inlet 142 and the fluid passageways 171 defined within the arrangement of longitudinal segments 172 in the slots 164. A cross-sectional view of an embodiment of a fluid distribution member 200 is shown in FIG. 4. The fluid distribution member 200 includes a fluid distribution channel 250 that is arranged to receive a coolant fluid from an opening (not shown in this figure) fluidly connected to a first end 215 of the fluid distribution channel 250. The fluid distribution channel 250 also includes a second end 220 which is located proximate to one of the plurality of fluid passageways 171 defined in the slot 164.

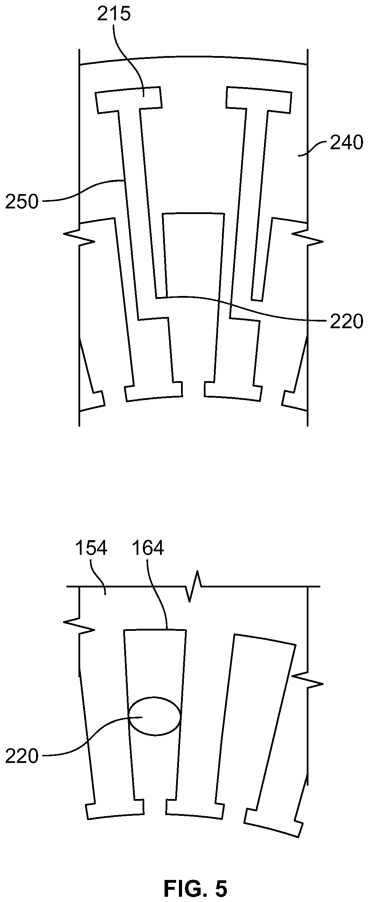

Through the use of the fluid distribution member 200, the amount of fluid coolant which flows into each one of the fluid passageways 171 defined in the slot 164 may be at least partially controlled, which allows for targeted application of fluid coolant to particular areas of the stator core 154. For example, as shown in FIG. 4 and also with reference to FIG. 5, during operation, the fluid distribution member 200 may receive fluid coolant from the fluid inlet 142 at an opening (not shown). This fluid coolant would then flow to the first end 215 of the fluid distribution channel 250 and then flow along the fluid distribution channel 250 to the second end 220 which is positioned proximate to a fluid passageway (not shown in this figure). In the embodiment shown in FIG. 4, the second end 220 is positioned proximate to a fluid passageway that is located at approximately a mid-point of the slot 164. In this manner, the fluid passageway 171 which is located proximate the second end 220 will receive a relatively larger amount of the flow of the fluid coolant therethrough, and this section of the stator core 154 will therefore be cooled more effectively. If the fluid passageway is located at a "hot spot" of the stator core 154 (i.e., an area of the stator core that reaches a relatively higher temperature during operation than surrounding areas of the stator core), additional cooling can therefore be provided to this "hot spot" such that the overall cooling effectiveness of the stator core 154 is increased. For example, in FIG. 5, if the central area of the slot 164 was determined to be a "hot-spot", through either empirical or computational determination techniques, the second end 220 of the fluid distribution channel 250 may be positioned to be close to a fluid passageway which is close to the central area of the slot 164.

In some embodiments, the second end 220 of the fluid distribution channel 250 is fluidically connected to only one of the plurality of fluid passageways and is fluidically isolated from other fluid passageways defined in the slot 164, such that fluid coolant flowing through the fluid distribution channel may flow through only one of the plurality of fluid passageways defined in a slot 164. In other embodiments, the second end 220 of the fluid distribution channel 250 is fluidically connected to a plurality of fluid passageways but is positioned proximate to only one of the fluid passageways, such that fluid coolant flowing through the fluid distribution channel 250 may flow through a plurality of fluid passageways but such that a relatively larger amount of fluid coolant flows through the fluid passageway located closest to the second end 220 of the fluid distribution channel 250.

It will be appreciated that, whilst the above explanation is provided with respect to a single fluid distribution channel 250, the fluid distribution member 200 will typically contain a plurality of fluid distribution channels 250 spaced circumferentially about the longitudinal axis, as shown in FIG. 4. In this manner, each fluid distribution channel 250 is configured to supply fluid coolant into one or more fluid passageways 171 defined through each respective slot 164 of the stator core 154.

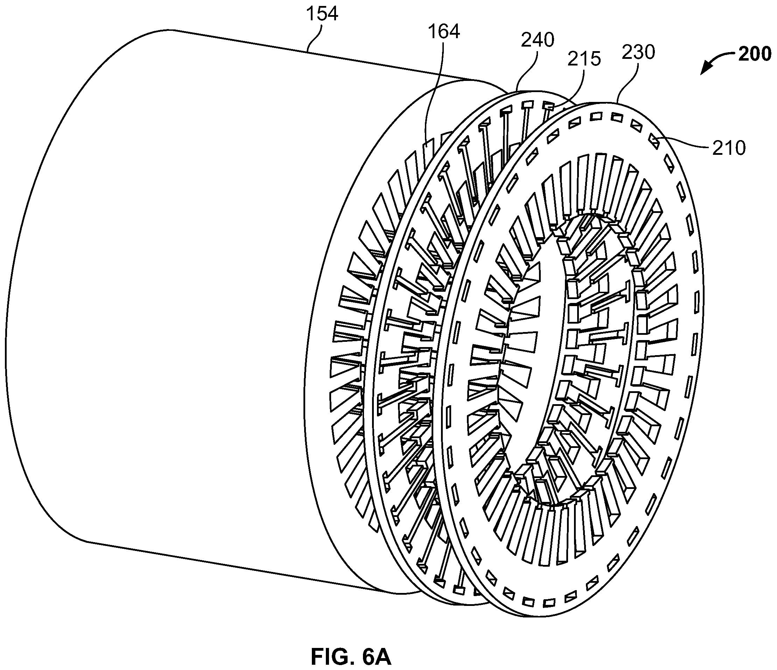

As can be seen in FIGs. 5 and FIG. 6A, the fluid distribution member 200 may be formed from at least two disc-shaped members 230, 240, for example at least two disc-shaped laminations that are formed from the same material as the laminations forming the stator core 154 and are bonded to the stator core 154 in the same manner as the laminations of the stator core 154 are bonded together. A first disc-shaped member 230 includes an opening 210 configured to receive fluid coolant from the first cavity 146. The second disc-shaped member 240 has formed therein the fluid distribution channel 250, and is configured to receive, at a first end 215 of the fluid distribution channel 250, fluid coolant received at the opening 210, and to distribute, from a second end 220 of the fluid distribution channel 250, the fluid coolant to a location proximate to one or more fluid passageways (not shown) located within a slot 164 of the stator core 154. It will be appreciated that, whilst FIG. 6A shows the second ends 220 of the fluid distribution channels 250 being positioned proximate to fluid passageways located at mid-points of the slots 164, the second ends 220 may be positioned proximate to fluid passageways located at other areas of the slots 164 in order to effectively distribute the fluid coolant according to where fluid coolant is most required. FIG. 5 shows an example of where fluid coolant would preferentially flow through a particular fluid passageway in the slot 164 with an exemplary location of the second end 220 of the fluid distribution channel 250.

In an embodiment, the opening 210 is formed by removing a section of material from the first disc-shaped member 240 and the fluid distribution channel 250, the first end 215 and the second end 220 are formed by removing a section of material from the second disc-shaped member 240. The first and second disc-shaped members 230, 240 may then be bonded together in order to form the fluid distribution member 200 as a bonded stack / laminate, which is then bonded to the stator core 154 in a similar manner as to how laminations of the stator core 154 are bonded together. In an embodiment, the first and second disc-shaped members have a width similar to the width of the laminations of the stator core, for example between about 1mm to about 5mm, for example about 3mm.

By forming the fluid distribution member 200 from two or more disc-shaped members 230, 240 in the manner as described above, the fluid distribution member 200 may be made both light-weight and relatively inexpensive, and the manufacturing process used to make the fluid distribution member 200 and to attach the fluid distribution member 200 to the stator core 154 may be simplified due to the ability to bond the two or more disc-shaped members together in a laminated manner.

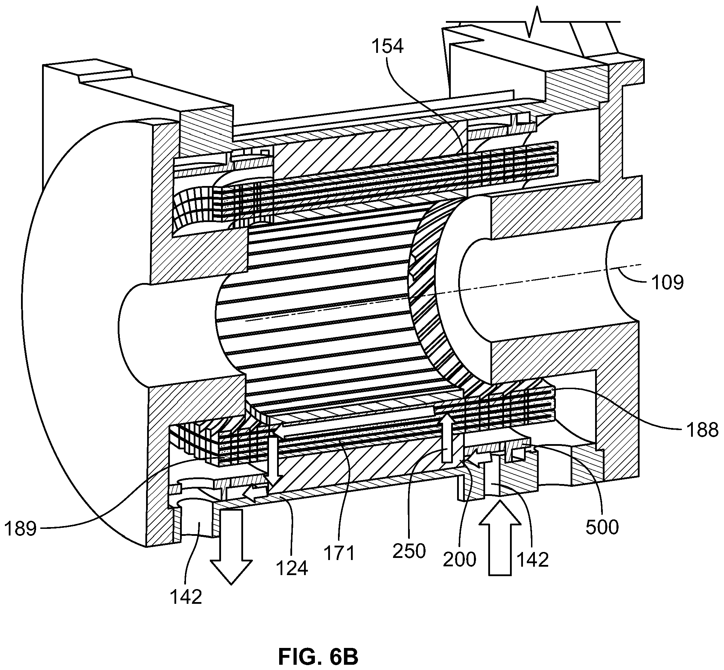

Another view of a stator core 154 with a fluid distribution member 200 attached thereto is shown in FIG. 6B. As can be seen in FIG. 6B, fluid coolant enters the stator assembly via the fluid inlet 142. Fluid coolant then flows to an area defined between a deflector 500 and the e-machine housing 124. At this location, a portion of the fluid coolant is forced through holes of the deflector 500 so as to be sprayed onto end windings 188 of the stator. It will be appreciated that the area defined between the deflector 500 and the e-machine housing 124 may be annular and extend around the longitudinal axis 109 of the stator core 154. The remaining fluid coolant flows into one or more openings 210 of the distribution member 200. After flowing into the one or more openings 210 of the distribution member 200, the fluid coolant flows into first ends 215 of the one or more fluid distributions channels 250, and then the fluid coolant flows radially (toward the longitudinal axis 109) through one or more fluid distribution channels 250 in the fluid distribution member 200. The second ends 220 of the one or more fluid distribution channels 250 terminate proximate to selected fluid passageways 171 defined within slots of the stator core 154. Fluid coolant flows out of the second ends 220 and into one or more fluid passageways 171 defined within slots of the stator core 154. Dependent upon the location of the second ends of the fluid distribution channels 250, fluid coolant will preferentially flow into specific fluid passageways 171 of the stator core 154. Fluid coolant flowing through the fluid passageways 171 will remove heat from the stator core 154. After exiting from the other end of the fluid passageways 171, fluid coolant may then flow radially away from the longitudinal axis, for example via the use of another fluid distribution member 200 disposed at the other axial end of the stator core 154. After exiting from the other fluid distribution member, fluid coolant then flows parallel to the longitudinal axis over another deflector 500. A portion of this fluid coolant may be forced through holes of the deflector 500 so as to be sprayed onto end windings 189 of the stator. The remaining portion of the fluid coolant then exits via fluid outlet 144. It will be appreciated that, via the use of the fluid distribution member 200, an effective seal is produced that prevents flooding of the end windings 188, 189 whilst also allowing for targeting of specific fluid passageways 171 within the stator core. Seals (not shown in this figure) disposed at either axial end of the stator core 154 and configured to seal the ends of the slots 164 in the stator core 154 will also prevent flooding of the end windings 188, 189. It will also be appreciated that, whilst FIG. 6B shows an embodiment incorporating deflectors 500, these deflectors are merely exemplary and may be replaced with another component or section of the e-machine housing 124 that functions to prevent flooding of the end windings whilst providing holes or spray jets to otherwise allow a portion of the fluid coolant to flow to or be sprayed onto the end windings 188, 189. The use of the fluid distribution member 200 also allows for these benefits to be achieved whilst only introducing a small amount of additional mass to the stator core 154, thereby only marginally increasing the weight of the e-machine, and also without increasing the manufacturing complexity of the stator core 154. For example, the fluid distribution member 200 may be formed in the same manufacturing step as forming the stator core 154 by bonding disc-shaped members together to form the stator core 154.

It is noted that, when the fluid distribution member 200 is formed from two or more disc-shaped members 230, 240, where the fluid distribution channel 250 is formed from a cut-out section of one of the disc-shaped members 230, 240, it is not possible to form a fluid distribution channel 250 that has more than one distinct second end 220. Furthermore, as noted above, in some embodiments, the fluid distribution channel 250 is fluidly connected to only one of the plurality of fluid passageways 171 and for effective cooling of the stator core 154, fluid coolant should be supplied to multiple fluid passageways 171.

In order to resolve this issue, the inventors recognized that it is possible to introduce additional disc-shaped members into the bonded stack of the fluid distribution member 200, where the additional disc-shaped members contain additional fluid distribution channels that have second ends which may be positioned proximate to different fluid passageways 171. In this manner, and as will be explained in more detail below, the fluid distribution member 200 may be formed from multiple disc-shaped members bonded together, where the fluid distribution member contains multiple fluid distribution channels connected to different fluid passageways 171 within the slot 164.

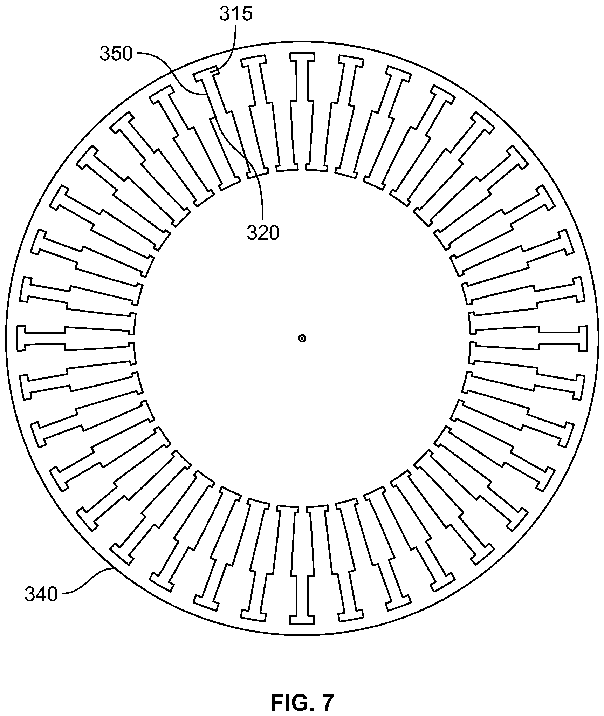

An exemplary part of a fluid distribution member with an alternate configuration of fluid distribution channel 350 is shown in FIG. 7.

As can be seen in FIG. 7, a third disc-shaped member 340 has formed therein a second fluid distribution channel 350, and is configured to receive, at a first end 315 of the fluid distribution channel 350, fluid coolant and to distribute, from a second end 320 of the fluid distribution channel 350, the fluid coolant at a location proximate to a fluid passageway (not shown) located within a slot of the stator core. In an embodiment, the fluid distribution channel 350, the first end 315 and the second end 320 are formed by removing a section of material from the third disc-shaped member 340. The third disc-shaped member may be bonded to the first and second disc-shaped members 230, 240 in order to form the fluid distribution member 200 as a bonded stack / laminate including all of the first, second and third disc-shaped members. In an embodiment, the third disc-shaped member has a width of between about 1mm to about 5mm, for example about 3mm.

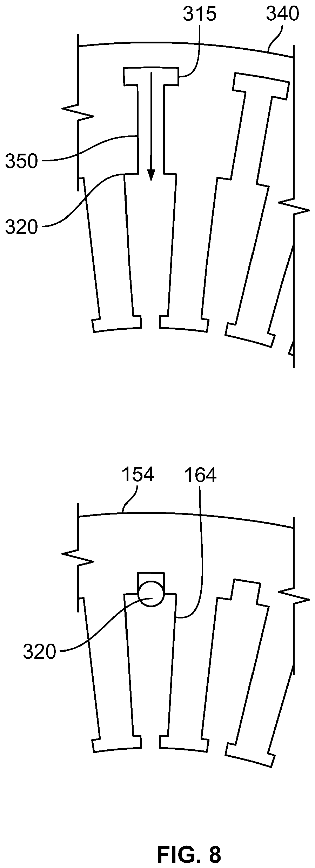

As can be seen in FIG. 7 and FIG. 8, the second end 320 of the second distribution channel 350 is located in a different position, relative to the slot, as compared to the second end 220 of the first distribution channel 250. In particular, whilst the second end 220 of the first distribution channel 250 delivers fluid coolant to a location at an approximate mid-point of the slot 164, the second end 320 of the second distribution channel 350 delivers fluid coolant to a radially outer section of the slot 164. FIG. 8 shows an example of where fluid coolant would preferentially flow through a particular fluid passageway in the slot 164 with an exemplary location of the second end 320 of the fluid distribution channel 350.

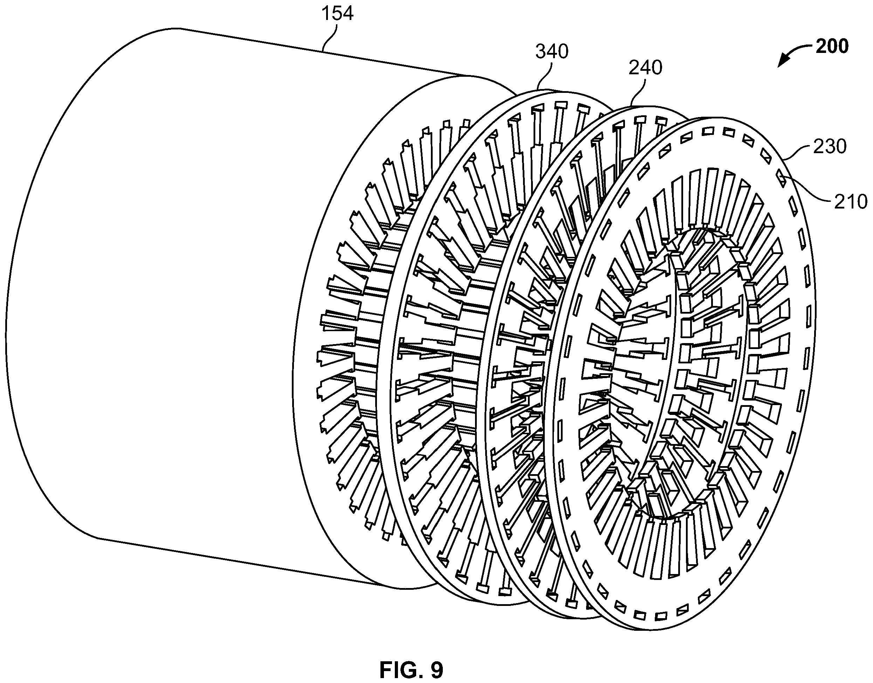

FIG. 9 shows an exploded view of a fluid distribution member 200 with first 230, second 240 and third 340 disc-shaped members. Whilst FIG. 9 shows these three disc-shaped members in a separated view, it will be appreciated that, in use, these three disc-shaped members may be bonded together as part of a laminated stack.

In use, fluid will be received at one or more openings 210 of the first disc-shaped member 230. The second disc-shaped member 240 has formed therein one or more first fluid distribution channels 250, and is configured to receive, at one or more first ends 215 of the one or more first fluid distribution channels 250, fluid coolant and to distribute, from second ends 220 of the one or more first fluid distribution channels 250, the fluid coolant at one or more locations proximate to one or more fluid passageways (not shown) located within a slot 164 of the stator core 154. Similarly, the third disc-shaped member 340 has formed therein one or more second fluid distribution channels 350, and is configured to receive, at one or more first ends 315 of one or more second fluid distribution channels 350, the fluid coolant received at the openings 210 and to distribute, from second ends 320 of the one or more second fluid distribution channels 350, the fluid coolant at locations proximate to one or more fluid passageways (not shown) located within a slot 164 of the stator core 154. In an embodiment, the first and second fluid distribution channels 250, 350 overlap such that fluid coolant may pass from one of these channels to another. In an alternative embodiment, the first and second fluid distribution channels 250, 350 do not overlap, such that they are fluidically isolated from one another.

As will be appreciated from the above explanation, use of multiple disc members 230, 240, 340, in the fluid distribution member 200 allows for the targeted application of fluid coolant to multiple specific areas of the stator core 154. For example, if it was determined that both an outer radial area of the stator core and a central area of the stator core were "hot-spots" (i.e., reached a relatively higher temperature during operation than other areas of the stator core), the combination of disc members 240 and 340 allows for targeted application of fluid coolant to fluid passageways in each of an outer radial area and a central area of the stator core 154.

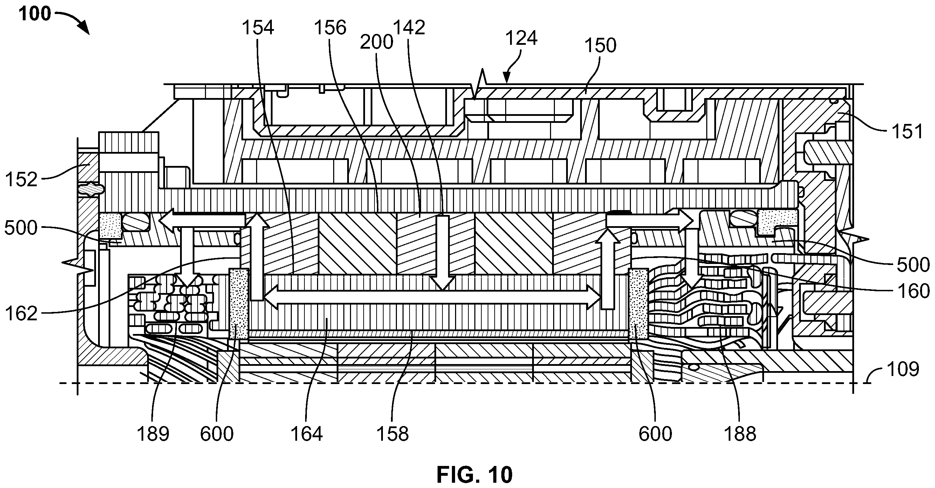

Whilst the above explanation has focused on the example of the fluid distribution member 200 being disposed at an axial end 160, 162 of the stator core 154, it will be appreciated that the fluid distribution member 200 may be disposed at other locations within the stator core 154. For example, turning to FIG. 10, an exemplary embodiment is shown in which the fluid inlet 142 is arranged such that fluid coolant enters the stator assembly at a point mid-way along the stator core 154. The fluid distribution member 200 may be disposed proximate to the fluid inlet 142. In such embodiments, it will be appreciated that the opening 210 of the fluid distribution member 200 must be arranged on an outer radial edge of the first disc-shaped member 230 such that fluid coolant may enter into the fluid distribution member 200 from this outer radial edge instead of from an axial face of the fluid distribution member 200. After fluid coolant is received at the opening 210 of the fluid distribution member 200, it flows through the fluid distribution channel and then enters into the slot 164 of the stator core at a location between the axial ends 160, 162 of the stator core 154, for example at a center point of the stator core 154. The fluid coolant may then flow axially, parallel to the longitudinal axis 109, in both directions towards each axial end 160, 162 of the stator core via fluid passageways formed in the slots 164, and then flow radially, perpendicular to the longitudinal axis 109, for example by means of fluid distribution members 200 disposed at each axial end 160, 162 of the stator core 154 toward fluid outlets 144 positioned proximate to each end of the stator core 154. Fluid coolant flooding of the end windings 188, 189 may be prevented by the use of seals 600 disposed at the axial ends 160, 162 of the stator core 154, and also by (for example) the use of deflectors 500 or other such sealing techniques.

As noted above, in order to prevent flooding of the end windings 188, 189, one or more seals 600 and deflectors 500 may be used. Whilst such sealants are effective at preventing the flow of fluid coolant therethrough, these sealants may not be 100% effective, and a small amount of fluid coolant may leak through the seal 600 to the end windings 173.

Whilst the above embodiments show techniques for improved cooling of the stator core, it was also recognized by the inventors that, in certain scenarios, such as for smaller e-machines that do not require as much cooling, it might be more desirable to improve the sealing effectiveness of the fluid coolant system such that it is not possible for liquid coolant to leak through to the end windings 188, 189.

In order to improve the sealing effectiveness of the fluid coolant system, the inventors developed a stator core in which fluid passageways are not formed within slots of the stator core. Instead, one or more dedicated cooling channels, which cooling channels are fluidically isolated from the slots, are formed in the stator core. The dedicated cooling channels are therefore still formed in the "active" part of the stator, but do not allow fluid coolant to flow around windings disposed in the slots of the stator core.

In this manner, fluid coolant may be received at an opening of a cooling channel from a fluid inlet, flow through the cooling channel to remove heat from the e-machine, and then exit from the e-machine at a fluid outlet. Fluid coolant may still be sprayed onto the end windings through holes formed in (for example) deflectors. Alternatively, fluid coolant may be sprayed onto the end windings from holes formed directly in the e-machine housing. However, because the one or more cooling channels are fluidically isolated from the slots, no seal is required between the open ends of the slots and the end windings, which would otherwise be necessary if fluid coolant flowed through fluid passageways formed in the slots of the stator core.

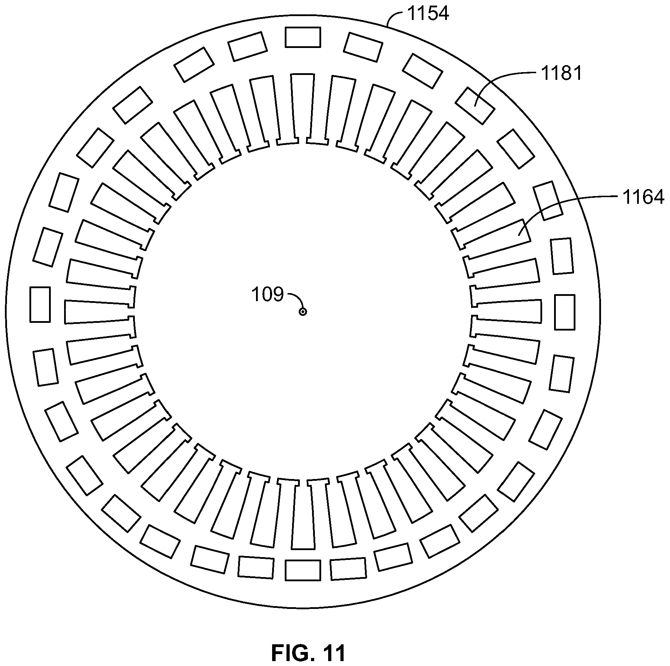

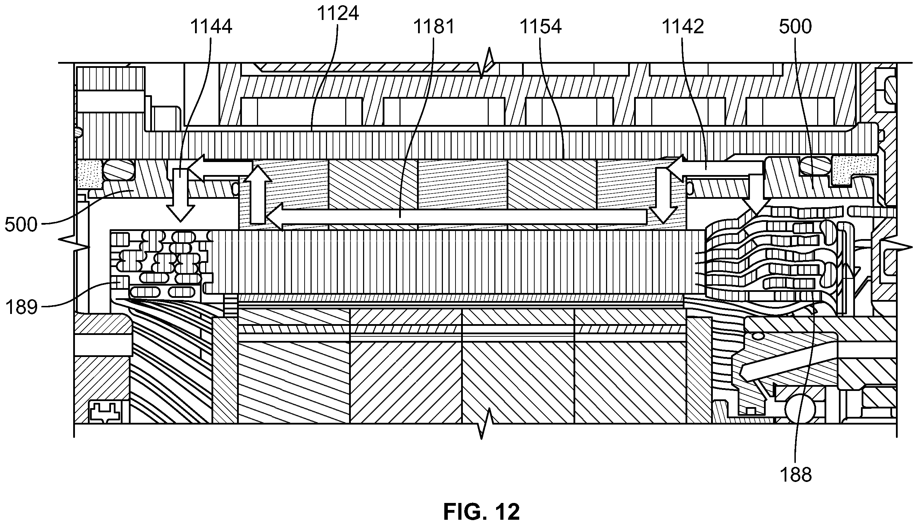

An exemplary disc-shaped member for the stator core 1154 having a dedicated cooling channel 1181 that is fluidically isolated from the slots 1164 of the stator core is shown in FIGs. 11 and 12. As will be appreciated, fluid coolant flowing from an inlet 1142 may be received at a first opening of a cooling channel 1181, may flow through the cooling channel 1181 to cool the stator core 1154, and then may exit the stator core 1154 at a second opening of the cooling channel 1181. The fluid coolant may therefore cool the stator core 1154 whilst being fluidically isolated from the slots 1164. Additionally, forming the cooling channel 1181 directly in the disc-shaped members of the stator core 1154 advantageously decreases the mass of the stator core 1154. With reference to FIG. 12, fluid coolant may enter at the fluid inlet 1142, may flow through a cooling channel 1181 defined in the stator core 1154 whilst also being sprayed onto the end windings 188, 189 via means of deflectors 500 or other structures, and may flow through an exit via a fluid outlet 1144.

Although the fluid inlet 1142 of FIG 12 is shown as being positioned closer to one axial end of the housing 1124 and the flow of fluid coolant through the cooling channel 1181 is shown as being in a single direction in these figures, it will be appreciated that other configurations are possible.

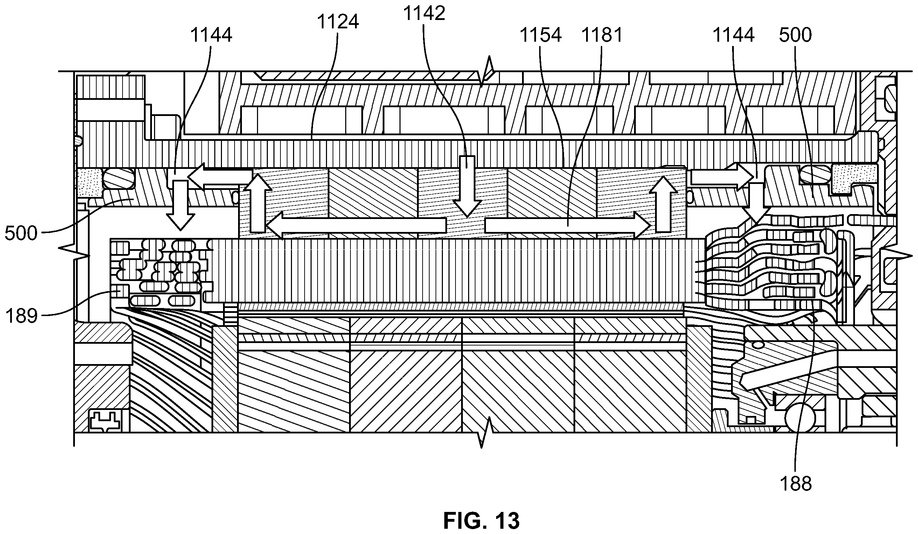

For example, as shown in FIG. 13, the fluid inlet 1142 may be positioned in a more central location of the e-machine. Fluid coolant introduced at this fluid inlet 1142 then flows towards two fluid outlets 1144 positioned at opposite axial ends of the e-machine housing 1124. It is noted that, in this embodiment, fluid coolant may still be sprayed onto the end windings 188, 189 by means of deflectors 500 or an alternative means, such as holes or spray jets formed directly in the housing.

It is to be noted that, when the fluid coolant enters the cooling channel 1181 in the stator core 1154 from a position other than at the first or second axial ends of the stator corer 1154, one or more of the disc-shaped members forming the stator core should be modified to have an opening at a radially outer edge to allow fluid ingress into the cooling channel 1181.

As will be appreciated from the above explanation, in each of the embodiments shown in FIGs. 11 to 13, no seals 600 are required to prevent flooding of the end windings 188, 189.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the present disclosure as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the present disclosure, it should be appreciated that a vast number of variations exist. It should also be appreciated that the exemplary embodiment or exemplary embodiments are only examples, and are not intended to limit the scope, applicability, or configuration of the present disclosure in any way. Rather, the foregoing detailed description will provide those skilled in the art with a convenient road map for implementing an exemplary embodiment of the present disclosure. It being understood that various changes may be made in the function and arrangement of elements described in an exemplary embodiment without departing from the scope of the present disclosure as set forth in the appended claims.

## Claims

1. An e-machine comprising:
a stator core (154) having a first axial end (160) and a second axial end (162) that are separated along a longitudinal axis (109), the stator core having a slot (164) that extends between the first axial end and the second axial end;
a plurality of winding members (170), the plurality of winding members comprising a plurality of segments (172) that are received in the slot and that extend between the first axial end and the second axial end, the plurality of segments disposed in an arrangement that define one or more fluid passageways (171) within the slot, the one or more fluid passageways extending between the first axial end and the second axial end of the stator core;
and a fluid distribution member (200), the fluid distribution member being attached to the first axial end of the stator core, the fluid distribution member comprising a first fluid distribution channel (250) having a first end (215) and a second end (220), the first end being connected to an opening (210) for receiving fluid and the second end being fluidly connected to at least one of the one or more fluid passageways.

2. The e-machine of claim 1, wherein the fluid distribution member (200) comprises a bonded stack of at least two disc-shaped members (230, 240), wherein a first disc-shaped member (230) of the at least two disc-shaped members comprises the opening (210) and a second disc-shaped member (240) of the at least two disc-shaped members comprises the second end (220) of the first fluid distribution channel (250).

3. The e-machine of claim 1, wherein the second end (220) of the first fluid distribution channel (250) is located proximate to only one of the plurality of fluid passageways (171) within the slot, optionally wherein the second end (220) is fluidically connected to only one of the plurality of fluid passageways within the slot and is fluidically isolated from other fluid passageways within the slot.

4. The e-machine of Claim 3, wherein the fluid distribution member (200) comprises a second fluid distribution channel (350), the second fluid distribution channel having a first end that is connected to the opening (210) and having a second end (320) that is different to the second end (220) of the first fluid distribution channel.

5. The e-machine of claim 4, wherein the bonded stack of at least two disc-shaped members comprises a third disc-shaped member (340), and wherein the second end (320) of the second fluid distribution channel is formed in only the third disc-shaped member.

6. The e-machine of claim 4 or claim 5, wherein the second end (320) of the second fluid distribution channel is located proximate to only one of the plurality of fluid passageways within the slot, optionally wherein the second end (320) is fluidically connected to only one of the plurality of fluid passageways within the slot and is fluidically isolated from other fluid passageways within the slot.

7. The e-machine of claim 6, wherein the second end (220) of the first distribution channel (250) is located proximate to a different one of the plurality of fluid passageways within the slot as compared to the second end (320) of the second distribution channel (350).

8. The e-machine of any preceding claim, further comprising an e-machine housing (124) that defines a cavity (129), the stator core (154) received in the cavity, the e-machine housing having a fluid inlet (142) and a fluid outlet (144), the housing fluid inlet and the housing fluid outlet being spaced apart along the longitudinal axis (109), and the housing fluid inlet being in fluid communication with the opening (210) of the fluid distribution member (200); and wherein the e-machine further comprises a fluid coolant system (140) configured to provide a coolant fluid into the cavity for flow into the fluid inlet (142).

9. The e-machine of any preceding claim, wherein the e-machine is an electric motor, or wherein the e-machine is an electric generator.

10. The e-machine of any preceding claim, further comprising a first seal (600) disposed at the first axial end (160) of the stator core (154) and a second seal (600) disposed at the second axial end (162) of the stator core (154), the first and second seals configured to prevent fluid flow from the slot (164) to end windings (188, 189) disposed outside of the stator core (154).

11. An e-machine comprising:
a stator core (1154) received in the cavity, the stator core having a first axial end and a second axial end that are separated along a longitudinal axis (109), the stator core having a slot (1164) that extends between the first axial end and the second axial end;
a plurality of winding members, the plurality of winding members comprising a plurality of segments that are received in the slot and that extend between the first axial end and the second axial end; and
a cooling channel (1181) that extends through the stator core between the first and second axial ends, wherein the cooling channel is fluidically isolated from the slot, and wherein the cooling channel comprises a first opening for fluid inflow and a second opening for fluid outflow.

12. The e-machine of claim 11, wherein the e-machine housing comprises a fluid inlet (1142) and a fluid outlet (1144), the fluid inlet and the fluid outlet being spaced apart along the longitudinal axis, and the fluid inlet being in fluid communication with the first opening of the cooling channel (1181) and the fluid outlet being in fluid communication with the second opening of the cooling channel; and wherein the e-machine further comprises a fluid coolant system (140) configured to provide a coolant fluid into the cavity for flow into the fluid inlet.

13. The e-machine of claim 11 or claim 12, wherein an end winding (188, 189) of the stator core is fluidically connected to the slot (1164) with no seal disposed therebetween.

14. The e-machine of claim 11, 12 or 13, wherein the e-machine is an electric motor.

15. The e-machine of claim 11, 12 or 13, wherein the e-machine is an electric generator.
